Europäisches Patentamt

European Patent Office

Office européen des brevets

(11) Numéro de publication : **0 409 756 B1**

(12) **FASCICULE DE BREVET EUROPEEN**

(45) Date de publication du fascicule du brevet :
21.09.94 Bulletin 94/38

(51) Int. Cl.⁵ : **H04L 7/033**

(21) Numéro de dépôt : **90460026.9**

(22) Date de dépôt : **13.07.90**

(54) **Dispositif de réception de données à égalisation différée et récupération de rythme rétroactive.**

(30) Priorité : **18.07.89 FR 8909956**

(43) Date de publication de la demande :
**23.01.91 Bulletin 91/04**

(45) Mention de la délivrance du brevet :
**21.09.94 Bulletin 94/38**

(84) Etats contractants désignés :
**DE GB NL**

(56) Documents cités :
**EP-A- 0 140 809**
**EP-A- 0 328 461**
**US-A- 3 356 955**
**US-A- 4 805 191**

(73) Titulaire : **FRANCE TELECOM**
**6, Place d'Alleray**
**F-75015 Paris (FR)**
Titulaire : **TELEDIFFUSION DE FRANCE S.A.**
**21-27, rue Barbès**
**F-92542 Montrouge Cédex (FR)**

(72) Inventeur : **Palicot, Jacques**
**15 rue Robelin**
**F-35000 Rennes (FR)**

(74) Mandataire : **Corlau, Vincent**
**c/o Cabinet Patrice Vidon,**
**Immeuble Germanium,**
**80 avenue des Buttes de Coesmes**
**F-35700 Rennes (FR)**

EP 0 409 756 B1

EP 0 409 756 B1

## Description

Le domaine de l'invention est celui des modules de traitement de données placés dans un récepteur d'un réseau de transmission ou de diffusion de données, et chargés de l'égalisation et de la récupération du rythme des données reçues, de façon à fournir aux éléments suivants de la chaîne du récepteur un signal net avec une phase d'horloge propre et resynchronisée.

L'invention s'applique à n'importe quel signal de données, dès lors qu'il est reçu ou ramené en bande de base.

Dans une application particulière, bien sûr non limitative de l'invention, le dispositif égaliseur à récupération de rythme est apte à traiter des signaux formés d'un multiplexage de données et d'informations analogiques, tels que le signal de télévision transmis selon les normes X-MAC, et notamment D2-MAC. Dans ce cas, le dispositif de l'invention est transparent pour la composante analogique du signal multiplexé.

On sait que la transmission ou la diffusion de données sur tous types de support engendre des perturbations linéaires et non linéaires. Il en résulte un phénomène de chevauchement des données, connu sous le nom d'interférence entre symboles.

Une autre conséquence, moins détaillée dans la littérature mais tout aussi importante, est la difficulté de récupérer correctement le rythme et donc la phase de l'horloge associée aux données.

Il est clair que l'opération de récupération de rythme est fondamentale pour les traitements ultérieurs du signal dans le récepteur.

Ainsi, dans un signal D2-MAC reçu, la récupération de rythme conditionne un grand nombre de fonctions du récepteur, tel que le fenêtrage des salves de données dans le multiplex, la synchronisation numérique du signal de données, ainsi que le Contrôle Automatique de Gain, ou encore la récupération de la composante continue. Autrement dit, en l'absence de récupération de rythme, aucun service ne peut être rendu à la réception.

On connaît des dispositifs de récupération de rythme, tels que celui représenté en figure 1. Dans ces dispositifs, particulièrement adaptés à des récepteurs D2-MAC, un CAN 11 numérise le signal reçu 10 sous commande d'un module de récupération d'horloge 12. Ce module 12 fonctionne par exemple à partir du signal analogique 10, sur un principe de détection des passages par les seuils à zéro du signal (par ex : 0). de façon à produire une raie à 10,125 MHz correspondant à la fréquence du signal duobinaire émis.

Le signal numérisé disponible en sortie du CAN 11 est ensuite acheminé vers une base de temps 13 qui assure une resynchronisation du signal reçu sur le signal de synchronisation de trame (Synchro Trame) 14, par exemple au moyen d'un registre à décalage coopérant avec un comparateur et une image mémorisée de la synchro trame. A l'aide de la base de temps 13, il est donc notamment possible d'extraire les salves numériques du D2-MAC, en vue du décodage du son et des données, ainsi que les autres informations de synchronisation tels que ligne, trame et/ou paquet.

Un tel montage présente toutefois deux inconvénients :
- tout d'abord, il peut se poser des problèmes d'accrochage de la phase d'horloge, dans le cas où le canal de transmission du signal 10 est fortement perturbé ;
- d'autre part, le phénomène d'écho induit dans le canal de transmission des distorsions de sa fonction de transfert, qui conduisent notamment à l'interférence intersymbole.

On a pensé combattre l'interférence intersymbole en mettant en oeuvre des correcteurs du type d'un module 15 de détection selon le maximum de vraisemblance utilisant l'algorithme de Viterbi. Ce type de structure de correction permet en effet généralement d'obtenir un gain de 3 dB sur le rapport signal sur bruit, lorsque le signal traité est un signal propre présentant un diagramme de l'oeil ouvert. Dans le cas contraire, on constate dans la pratique que l'efficacité d'un décodeur de Viterbi reste limité en cas de perturbation.

Un objectif de l'invention est de fournir un système d'égalisation permettant notamment de corriger de façon précoce, à la réception, le signal reçu, de façon à reculer les limites de "décrochage" du récepteur. Le dispositif d'égalisation de l'invention est compatible avec des systèmes à décodage de Viterbi, mais peut également ment être mis en oeuvre en l'absence de ce type de décodeur.

L'opération d'égalisation, de façon connue, vise à traiter le signal reçu dans un module d'égalisation dont la fonction de transfert est le plus proche de l'inverse de celle de canal de transmission à tout instant.

On connaît des dispositifs de correction de distorsion linéaire, notamment sous la forme d'un égaliseur autoadaptatif s'adaptant sur le signal de données comme décrit dans le document de brevet français 83 17438. Selon ce document, l'égaliseur consiste à mettre en oeuvre un algorithme de minimisation de l'erreur quadratique moyenne dans le signal reçu, en ajustant des coefficients de filtrage d'un filtre numérique d'égalisation du signal reçu. Un grand nombre d'algorithmes peut être envisagé, comme ceux présentés dans la thèse "étude et réalisation d'un correcteur d'écho adapté à la diffusion de données DIDON" (soutenue le 9 décembre 1983 devant l'Université de Rennes I par Jacques PALICOT).

2

Par le document de brevet français 88 01641, on connaît également un égaliseur autoadaptatif applicable aux signaux de type X-MAC, et notamment aux signaux HD-MAC, consistant à introduire un signal de référence dans le multiplex temporel de signaux d'images analogiques et de signaux numériques de son et de données caractéristiques des signaux X-MAC, de façon à utiliser ce signal de référence pour réaliser une égalisation adaptative à la réception. L'égalisation s'effectue alors en employant un filtre transversal adaptatif, alimenté par les échantillons du signal HD-MAC, muni de moyens d'adaptation de ses coefficients par comparaison entre la séquence de référence reçue à la sortie du filtre et la séquence de référence mémorisée.

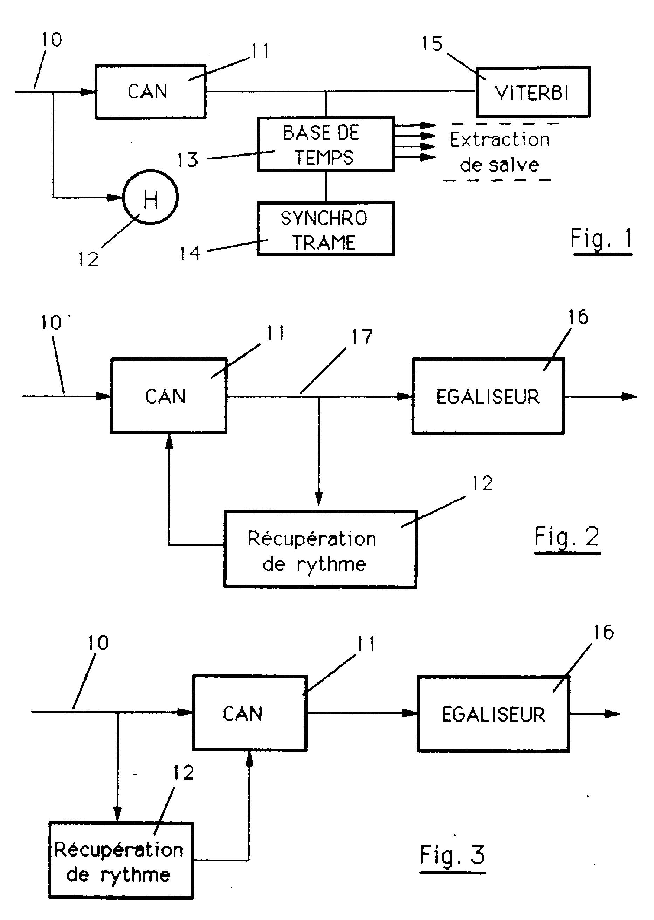

On connaît deux types de montage permettant de combiner un dispositif d'égalisation avec un récupérateur de rythme, comme représentés en figures 2 et 3.

Suivant le type de montage, le module de récupération de rythme 12 prélève un signal numérique 17 ou un signal analogique 10 suivant qu'il est monté en aval (fig.2), ou en amont (fig.3) du CAN 11. Mais, dans tous les cas, l'égaliseur 16 est toujours placé en cascade derrière le système CAN 11/récupérateur de rythme 12. Il en résulte que la récuperation de rythme 12 n'est jamais réalisée sur le signal de données égalisé, et ne profite donc pas de la remise en forme des données permise par l'égaliseur 16. Ceci constitue une limite importante des systèmes d'égalisation, car lorsque la phase d'horloge établie par le récupérateur de rythme n'est pas stable, l'égalisation ne peut pas fonctionner.

L'objectif de l'invention est également de pallier ces inconvénients des systèmes existants.

Plus précisément, un objectif essentiel de l'invention est de repousser les limites du service, au récepteur, en permettant une récupération de rythme même lors de fortes perturbations dans le canal de transmission.

Un autre objectif essentiel de l'invention est de permettre une récupération de rythme sur le signal reçu égalisé, en supprimant les risques de divergence du montage.

Un objectif complémentaire de l'invention est de fournir un système égaliseur et récupérateur de rythme qui inclut une fonction robuste d'accrochage de la phase d'horloge du signal reçu, selon un processus de mise en oeuvre de tentatives successives incluant la possibilité d'échec unique ou répété.

Ces objectifs, ainsi que d'autres qui apparaîtront par la suite, sont atteints à l'aide d'un dispostif égaliseur à récupération de rythme, notamment destiné à équiper un récepteur d'un réseau de transmission ou de diffusion d'un signal comprenant des données,

dispositif du type comprenant un égaliseur numérique alimenté par un CAN de numérisation du signal reçu coopérant avec un circuit récupérateur de rythme assurant notamment la synchronisation du CAN,

ledit égaliseur comprenant un module de filtrage constitué d'un filtre numérique commandé par un module de calcul de coefficients de filtrage, à partir d'informations représentatives du signal reçu, et des moyens de stabilisation dudit calcul de coefficients de filtrage,

et le circuit récupérateur de rythme étant disposé en rebouclage rétroactif en sortie de l'égaliseur numérique de façon à piloter ledit CAN d'alimentation de l'égaliseur.

De cette façon, la récupération de rythme peut s'effectuer sur un signal propre, du fait qu'il a été préalablement égalisé. La présence de moyens de stabilisation du calcul de coefficients permet par ailleurs d'éviter les risques de divergence du processus d'égalisation.

Selon une autre caractéristique de l'invention. lesdites informations représentatives du signal reçu sont fournies par des moyens d'élaboration de séquences de simulation d'une phase stable de l'horloge du signal reçu, constituées par la répétition d'une salve numérique prélevée dans le signal reçu.

Avantageusement, lesdits moyens d'élaboration des séquences de simulation comprennent des moyens de mémorisation de ladite salve de données prélevée, coopérant avec des moyens d'émission répétitive de ladite salve mémorisée vers ledit module de filtrage, et des moyens de commande de la mémorisation d'une nouvelle salve de données, pour un nouveau cycle, après élaboration des nouveaux coefficients de filtrage à partir de la séquence de répétition de la salve de données courante.

De cette façon, le dispositif présente deux avantages cumulatifs :
- le module de calcul des coefficients de filtrage travaille sur un signal source à phase d'horloge stable, ce qui permet une optimisation de l'opération d'égalisation ;
- l'égalisation du signal reçu s'effectue en différé, du fait du temps de traitement, en parallèle, des informations prélevées dans le module de calcul des coefficients de filtrage; de cette façon, on limite notamment les risques de divergence, on rend possible l'égalisation d'un signal de fréquence très élevée, notamment de l'ordre de 10 MHz, et on facilite le traitement des signaux multiplexés temporellement.

Dans un mode de réalisation préférentiel de l'invention, l'égaliseur numérique est un filtre transversal, et peut par exemple fonctionner selon le critère de l'erreur quadratique moyenne.

Selon une caractéristique importante de l'invention, les moyens de stabilisation du calcul de coefficients de filtrage comprennent des moyens de commande de l'interruption du calcul de nouveaux coefficients de filtrage, suivant un critère de franchissement d'un seuil d'égalisation satisfaisant. La grandeur d'expression du dispositif de commande d'interruption appartient avantageusement au groupe comprenant l'erreur quadratique moyenne, le taux de viol d'un signal doubinaire, et une valeur de seuil pour au moins un coefficient de filtrage de pilotage du filtre numérique.

Cette caractéristique est fondamentale, puisqu'elle permet d'éviter les risques de divergence du processus d'égalisation à récupération de rythme rebouclé, en interrompant le processus itératif égalisation/récupération de rythme dès lors qu'on a obtenu une correction satisfaisante du signal.

D'autre part, selon une autre caractéristique avantageuse de l'invention. lesdits moyens de stabilisation du calcul de coefficients de filtrage comprennent des moyens de commande du Retour A Zéro des coefficients de filtrage, suivant un critère de franchissement d'un seuil de dérive maximale de fonctionnement du module de filtrage.

Préférentiellement, ledit critère de Remise A Zéro appartient au groupe comprenant le franchissement d'un seuil par la somme des coefficients de filtrage, et le franchissement d'un seuil de valeur maximale par au moins un desdits coefficients de filtrage.

Cette caractéristique de l'invention permet la mise en oeuvre d'un processus d'accrochage du signal, fonctionnant par tentatives successives, avec Remise A Zéro en cas d'échec.

Dans le cas de la réception d'un multiplex temporel de signaux analogiques et numériques, le dispositif de l'invention comprend avantageusement :

- un premier moyen d'accrochage d'un train numérique dans le signal reçu;
- un second moyen de fenêtrage d'une salve numérique dans le signal reçu, à partir du calcul d'une base de temps dans un train numérique accroché et égalisé, ledit dispositif comprenant des moyens de commutation sélective dudit premier moyen d'accrochage ou dudit second moyen de fenêtrage, pour la commande de prélèvement et/ou de mémorisation d'une salve numérique constitutive desdites informations représentatives du signal reçu.

Ce système d'accrochage et de fenêtrage de salve numérique, dans deux étages distincts, confère au dispositif égaliseur/récupérateur de rythme une bonne robustesse en cas de canal de transmission perturbé.

En outre, lorsque le signal reçu est un signal multiplexé de type X-MAC, ladite salve prélevée est avantageusement la salve des données d'une signal ligne, et/ou ledit filtre numérique est un filtre transversal fonctionnant au double de la fréquence des données.

D'une matière générale, il est avantageux que ledit CAN assure une numérisation à une fréquence au moins double de la fréquence bit du signal reçu.

L'invention concerne également un procédé d'égalisation et de récupération de rythme réalisé au moyen d'un dispositif consistant à :

- prélever, après numérisation du signal reçu, une salve de données dans ledit signal numérisé, de façon à former une séquence de simulation d'une fréquence d'horloge stable par répétition de ladite salve prélevée ;
- piloter un filtre numérique de traitement du signal reçu numérisé, au moyen d'un module de calcul de coefficients de filtrage élaborés à partir de ladite séquence de simulation, ledit pilotage étant effectué en différé par rapport au prélèvement de la salve de données ;
- obtenir une nouvelle référence de synchronisation, à partir de l'analyse du signal reçu numérisé et filtré, par un module récupérateur de rythme ;
- piloter le fenêtrage de prélèvement des salves de données et/ou le CAN de numérisation du signal reçu de ladite nouvelle référence de synchronisation.

Ce procédé comporte préférentiellement au moins une des conditions d'arrêt de fonctionnement suivantes :

- interruption du calcul de nouveaux coefficients de filtrage, selon un critère de franchissement d'un seuil d'égalisation satisfaisant ;
- Remise A Zéro des coefficients de filtrage, suivant un critère de franchissement d'un seuil de dérive maximale de fonctionnement du module de filtrage.

D'autres caractéristiques et avantages de l'invention apparaîtront à la lecture de la description suivante d'un mode de réalisation préférentiel de l'invention, dans le cas de la réception d'un signal de type D2-MAC, donné à titre illustratif et non limitatif, et des dessins annexés dans lesquels :

- les figures 1, 2 et 3 schématisent des montages connus de l'état de la technique, commentés en préambule ;
- la figure 4 est un schéma illustrant le principe général de récupération de rythme rebouclée en sortie de l'égaliseur, du dispositif de l'invention ;
- la figure 5 est un schéma détaillant, dans la structure de la figure 4, les modules essentiels constitutifs de l'égaliseur, dans un mode préférentiel de réalisation du dispositif de l'invention, un module de commutation soit d'un extracteur de salves duobinaires, soit d'une base de temps de fenêtrage des salves duobinaires, dans les cas d'un signal reçu de type D2-MAC ;

- la figure 6 est un chronogramme présentant le séquencement de différentes étapes du processus itératif d'égalisation et de récupération de rythme selon l'invention.
- les figures 7A,7B; 8A,8B; 9A,9B, schématisent des diagrammes de l'oeil illustrant le fonctionnement du dispositif d'égalisation/récupération de rythme de l'invention, suivant que la phase de l'horloge récupérée est ou non stable et/ou optimale;
- la figure 10 est un schéma de principe d'un filtre transversal de l'état de la technique connu, utilisable dans l'égaliseur du dispositif de l'invention.

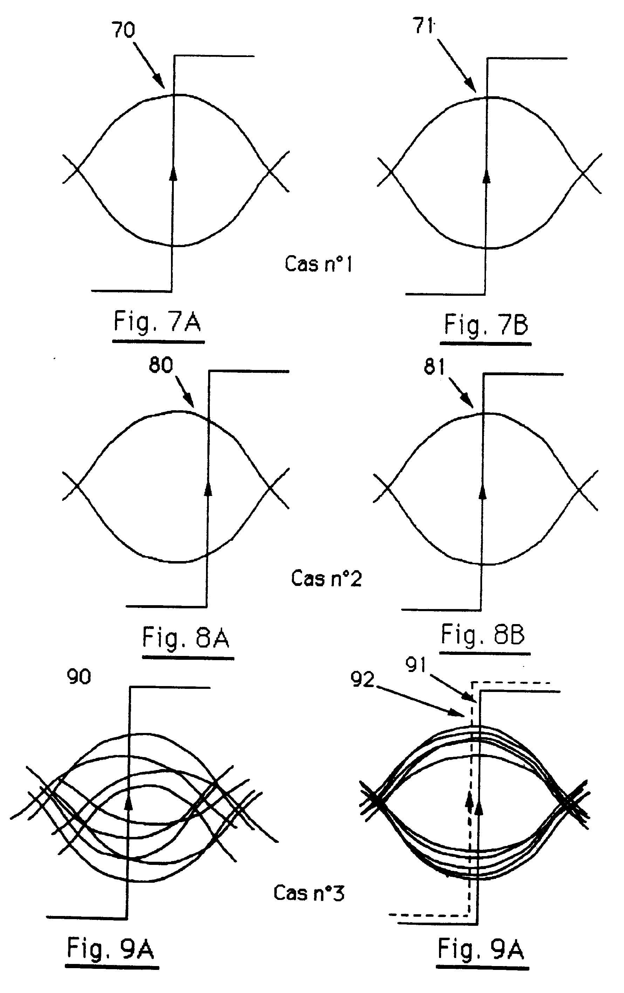

Le mode de réalisation détaillé ci-après dans les figures 5 à 10 correspond à la mise en oeuvre du dispositif égaliseur/récupérateur de rythme dans le cas de la réception d'un signal de type D2-MAC, c'est-à-dire constitué par un multiplex d'une salve de son et données duobinaires, et d'un signal analogique de luminance et de chrominance, pour chaque ligne d'un signal de télévision.

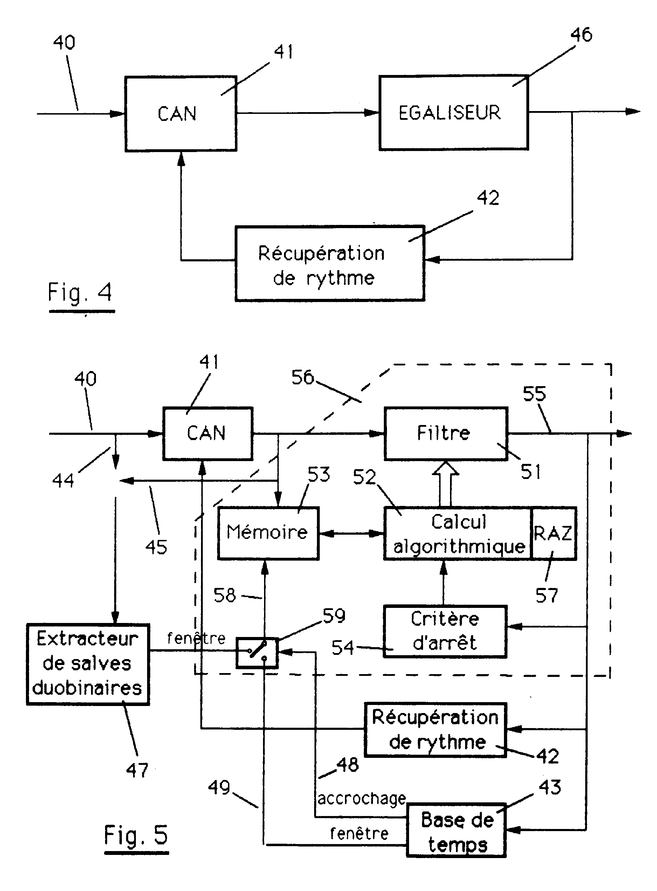

La figure 4 schématise le principe de rebouclage de la récupération de rythme 42 en sortie de l'égaliseur 46, de façon à piloter le convertisseur analogique numérique 41 chargé de numériser le signal reçu 40. On conçoit que ce montage rétroactif permet, dans certaines conditions de fonctionnement, de bénéficier du double avantage d'effectuer la récupération de rythme sur un signal égalisé, et d'optimiser la correction du signal reçu en égalisant un signal qui a été numérisé sur une phase d'horloge optimisée.

Comme représenté en figure 5, le signal d'entrée 40, après numérisation 41, d'une part accède à une mémoire 53, et d'autre part passe à travers un filtre numérique 51. La mémoire 53 et le filtre 51 appartiennent à un même module de filtrage 56 comportant en outre un module 52 de calcul de coefficients de filtrage, et des modules 54,57 de stabilisation du calcul de coefficients, élaborant des conditions d'arrêt du calcul.

Le module 52 calcule, à l'aide des données mémorisées en 53 et d'un algorithme détaillé plus loin, les coefficients du filtre 51. L'égalisation est donc réalisée en temps différé, le signal continuant à passer dans le filtre 51 pendant le calcul des coefficients.

Les données de sortie 55 du filtre 51 passent à travers le module 54, qui calcule, à l'aide de critères présentés plus loin, des conditions d'interruption du calcul de nouveaux coefficients, lorsque les coefficients courants permettent d'obtenir une égalisation satisfaisante. Le module 57, quant à lui, assure la RAZ (Remise A Zéro) des coefficients du filtre 51 lorsqu'on a constaté une divergence du dispositif.

Les données de sortie 55 passent également à travers le module 42 de récupération de rythme, qui, grâce aux caractéristiques précédentes, permettent de récupérer une horloge stable.

On va maintenant détailler différents modules du dispositif de la figure 5.

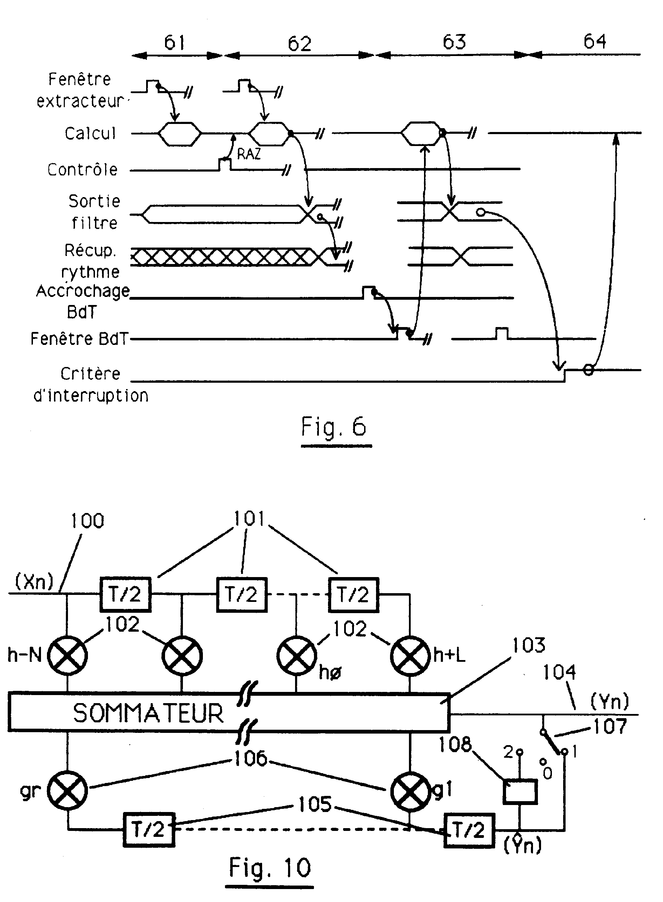

Le filtre numérique 51 est par exemple un filtre transversal du type représenté en figure 10. Le signal d'entrée 100 du filtre est constitué d'une série d'échantillons $x_n$. Chaque échantillon traverse une première chaîne de cellules 101 montées en séries et introduisant chacune un retard. Ce retard est par exemple égal à T/2, soit la période correspondant à une fréquence d'échantillonnage double de la fréquence bit du signal reçu. Un jeu de L + N + 1 multiplicateurs 102 relie la chaîne des cellules 101 à un circuit sommateur 103. Les coefficients de multiplication des multiplicateurs 102 sont calculés par le module de calcul algorithmique 52 de la figure 5. Le jeu de multiplicateurs 102 présente un multiplicateur central noté $h_0$. Le filtre est transparent lorsque seul le multiplicateur central $h_0$ est activé (coefficient de multiplication égal à l'unité), les autres multiplicateurs étant à coefficient nul.

A titre d'exemple, un prototype de l'invention a été réalisé, dont le filtre comprend des multiplicateurs 102 exprimant des coefficients de multiplication compris entre +2 et -2 environ exprimés sur 9 eb. La précision ainsi obtenue sur les données de sortie de filtre permet de faire passer l'intégralité du signal D2-MAC/Paquet dans le filtre, sans dégradation préjudiciable des composantes analogiques.

La sortie du circuit sommateur 103 fournit un signal échantillonné filtré $y_n$ 104. Elle alimente d'autre part une chaîne de cellules 105 apportant chacune un retard, par exemple de valeur T/2. Les sorties de chacune des cellules 105 sont reliées au sommateur 103 à travers des multiplicateurs 106.

Le commutateur 107 présente trois positions 0,1,2, correspondant respectivement à la réalisation d'un filtre transversal linéaire direct, à un filtre transversal linéaire récursif et à un filtre transversal non linéaire récursif comprenant un module de décision 108 dans la boucle récursive de la chaîne des cellules 105 et multiplicateurs 106.

Le dispositif de l'invention est compatible avec ces différents types de filtre transversal, ainsi qu'à d'autres types de filtres numériques.

Les coefficients des multiplicateurs $h_l$ et $g_l$ sont calculés par le module de calcul 52, comme on le verra plus loin.

A l'initialisation le filtre est transparent (c'est-à-dire que le signal de sortie est identique au signal d'entrée), ou bien on réalise une fonction de filtrage prédéterminée (passe bas par exemple) jusqu'à réception des coefficients calculés.

Le système fonctionne de manière optimale, lors de fortes perturbations, lorsque le filtre est linéaire. En

5

effet, le taux d'erreur est très largement supérieur à $10^{-2}$ et le risque de propagation d'erreurs, dans une structure récursive à décision dans la boucle, prend tout son sens.

De même, il est préférable que le filtre fonctionne à une fréquence supérieure à celle des données afin de profiter de la meilleure remise en phase de ce type d'égalisation.

Dans le cadre de l'application D2-MAC/Paquets, le filtre numérique est avantageusement un filtre transversal linéaire (RIF, Réponse Impulsionnelle Finie) qui fonctionne au double de la fréquence des données.

On pourra trouver des détails sur les caractéristiques du filtre transversal dans la thèse précitée.

Le module de calcul algorithmique 52 est par exemple constitué d'un processeur ou d'un automatique spécialisé qui utilise les données stockées en mémoire 53, et fournit les coefficients de filtrage au filtre numérique après calcul.

Ce module de calcul peut mettre en oeuvre l'un quelconque des algorithmes permettant de minimiser un critère d'égalisation, par exemple l'erreur quadratique moyenne EQM; s'exprimant sous la forme :

$$EQM = E\{(y_k - a_k)^2\} \quad (1)$$

avec :

- $y_k$ : symbole reçu
- $a_k$ : symbole émis

A partir de cette valeur minimisée, les coefficients du filtre sont calculés itérativement selon la formule :

$$H_{k+1} = H_k - \mu X_k e_k \quad (2)$$

avec:

- $H_k$, $H_{k+1}$ : vecteurs courants des coefficients de multiplication
- $X_k$ : vecteur des échantillons courants
- $e_k$ : erreur en sortie du filtre
- $\mu$ : pondérateur ($\mu > 0$)

L'algorithme de convergence permettant d'obtenir la minimisation du critère, à savoir dans le cas présenté la minimisation de l'erreur quadratique moyenne, peut-être par exemple tout type d'algorithme du gradient, et similaires ou dérivés.

On trouvera des détails et des exemples de ces algorithmes dans le document de thèse précitée, ou encore dans les documents de brevet français antérieurs 83 17438 et 88 01641.

Selon l'invention, le calcul des coefficients de filtrage s'effectue à partir de séquences de simulation formées au moyen de données stockées dans la mémoire 53.

Ces données sont prélevées dans le signal numérisé en sortie du CAN 41. La mémoire coopère avec les moyens de commande 58 de l'écriture des données numérisées, et de la lecture de ces données par le module de calcul 52.

La mémorisation des données correspond au principe d'égalisation en différé, caractéristique de l'invention, qui présente notamment les avantages suivants :

- elle permet d'égaliser un signal dont la fréquence élevée interdit toute automatisation de l'algorithme ;
- elle résoud les problèmes posés par l'égalisation de signaux de nature différente multiplexés temporellement (par exemple dans le cas d'un signal D2-MAC), en permettant au module de calcul 52 de travailler sur la seule partie numérique du signal multiplexé ;
- elle permet d'autre part de former des séquences de simulation à phases d'horloge stables, par répétition des salves numériques prélevées et mémorisées.

Ce dernier point est particulièrement important, et sera illustré plus loin, à propos de la description du fonctionnement du système en réception D2-MAC. L'objectif est en effet d'obtenir des séquences numériques très longues pour permettre à l'algorithme mis en oeuvre dans le module de calcul 52 de converger (plusieurs milliers d'itérations), sans obtenir de distorsions de la phase d'horloge dans la séquence numérique. Or, le prélèvement en direct de la séquence numérique de grande longueur dans le signal reçu, ou encore par juxtaposition de plusieurs salves numériques (dans le cas d'un mutliplex de type D2-MAC) risque de provoquer des hétérogénéités de la phase d'horloge du fait des distorsions induites par le canal de transmission. La répétition d'une salve numérique suffisamment courte pour ne pas présenter de distorsion de phase est une caractéristique essentielle de l'invention pour pallier cet inconvénient.

Dans le cas d'un signal D2-MAC, la salve numérique prélevée correspond par exemple à la partie numérique d'un signal ligne.

La figure 5 détaille également un mode de réalisation avantageux du système de commande d'écriture de salve numérique dans la mémoire 53, dans le cas d'un signal reçu à plusieurs composants multiplexés temporellement, du type de D2-MAC.

Ce système de commande d'écriture comprend un commutateur 59 connectant sélectivement à l'entrée de commande 58 soit un fenêtrage issu d'un extracteur de salve duobinaire 47, soit un fenêtrage 49 provenant de la base de temps 43 obtenue à partir du signal filtré 55.

Ce système permet un accrochage des salves duobinaires, à deux étages, de façon à repousser les limites de fonctionnement du dispositif de l'invention en cas de forte perturbation du canal de transmission du signal D2-MAC.

Le premier étage est constitué par l'extracteur de salve duobinaire 47, qui est alimenté soit par le signal 40,44 en bande de base, soit par le signal numérisé 45.

L'extracteur de salve duobinaire est par exemple celui décrit dans le document de brevet français 89 05978. Le dispositif décrit dans ce document met en oeuvre un procédé d'extraction de synchronisation pour système de diffusion à multiplexage temporel de signaux numériques et de signaux analogiques, tels que les signaux D2-MAC. Sa mise en oeuvre comporte deux phases successives, à savoir une phase d'acquisition, puis une phase de maintien ; ces phases sont réalisées notamment à partir de la détection, dans le signal reçu, d'informations récurrentes à la fréquence ligne de caractéristiques prédéterminées, jusqu'à récupération de la fenêtre d'encadrement des salves de données.

L'extracteur de salve duobinaire 47 permet une récupération de synchronisation en cas de signal fortement perturbé. Ensuite, lorsque le signal est correctement égalisé, l'horloge est stable, la base de temps 43 peut s'accrocher ; la fenêtre permettant de mémoriser sélectivement les salves duobinaires peut alors être fournie par la base de temps, par le fil de commande 49.

Le commutateur 59 est par exemple un PAL, dont le basculement est réalisé par le fil 48 de détection d'accrochage de la base de temps 43.

Les modules 54 et 57 correspondent à des conditions d'arrêt du calcul algorithmique du module 52. Ils permettent de stabiliser les calculs, en évitant notamment les divergences du processus d'égalisation.

Plus précisément, le module 54 élabore des critères d'interruption du calcul de nouveaux coefficients de filtrage, lorsque le signal filtré satisfait à un certain critère d'égalisation satisfaisant. Pour ce faire, le module 54 est alimenté par le signal filtré 55 ; l'activation de la fonction d'interruption se traduit soit par l'interruption du rafraîchissement de la mémoire 53, soit par l'interruption de la boucle de calculs itératifs du module 52, soit encore par l'interruption du rafraîchissement des coefficients de filtrage fournis aux cellules de multiplication du filtre numérique 51, soit par tout autre moyen équivalent.

Plusieurs critères d'interruption peuvent être utilisés. Un premier critère est celui de l'erreur quadratique moyenne, lorsque l'algorithme de convergence en amène la valeur en deçà d'un seuil de minimisation suffisante prédéterminée.

On peut également utiliser par exemple le taux d'erreur du signal reçu comme critère d'interruption.

Dans le cas d'une application de type MAC Paquets, un autre critère d'interruption très simple peut être utilisé : c'est le critère de rupture de code (transitions interdites) du signal duobinaire (appelé également taux de viol). En première approximation, ce critère est équivalent au taux d'erreur, mais il a l'avantage de pouvoir être obtenu par analyse directe du signal reçu, sans calculs complexes.

D'autres critères d'interruption sont utilisables.

Lorsque le critère retenu dépasse une limite fixée, par exemple un taux de rupture de code ou taux de viol de $10^{-5}$, le calcul algorithmique est inhibé. Le calcul reprend lorsque la condition précédente n'est plus respectée (cas d'une nouvelle perturbation).

Le module de RAZ 57 permet de détecter une divergence éventuelle du module de calcul algorithmique 52, de façon à réinitialiser le dispositif. Une telle situation de divergence peut par exemple intervenir lorsque les données ont une phase non stable (saut de phase pendant la mémorisataion) ou lorsque l'échantillon retenu comme pertinent pour le calcul de la sortie du filtre simulé n'est pas le bon.

Deux types de détection de divergences, différentes et complémentaires peuvent être données à titre d'exemple :

- valeurs limites des coefficients de filtrage : les coefficients sont comparés, soit constamment, soit à la fin du calcul, à des valeurs limites. Lorsqu'un coefficient dépasse une valeur limite, alors tous les coefficients reprennent leurs valeurs d'initialisation ;
- somme des coefficients de filtrage : le fonctionnement est exactement le même en comparant cette fois la somme des coefficients à une valeur limite.

Ce dernier contrôle est particulièrement important pour éviter que l'hyperactivation du filtrage aboutisse à une annulation complète du signal, et donc à une impossibilité totale d'amorcer une nouvelle boucle de l'algorithme de calcul pour converger. De plus, dans le cas de l'application D2-MAC/Paquets, l'annulation du signal interromprait le service en empêchant le passage des composantes continues, nécessaires pour effectuer les fonctions de CAG et de clamp notamment.

La figure 5 comporte enfin un module de récupération de rythme 42. Ce module de récupération de rythme peut être quelconque, par exemple du type fonctionnant par détection des passages de seuil dans le signal reçu (par ex. les passages à zéro ou autres). L'homme du métier pourra lui-même identifier d'autres procédés de récupération de rythme, en fonction du type de signal reçu.

On va maintenant décrire le fonctionnement du dispositif d'égalisation/récupération de rythme de l'invention.

La table I présente les étapes principales du processus de mise à jour des coefficients de filtrage, par itérations, sous forme d'un organigramme.

Le processus comprend les étapes suivantes :
- initialisation du filtre, c'est-à-dire initialisation des coefficients de filtrage de façon que le filtre soit transparent lors du démarrage du processus.
- après initialisation de l'algorithme, on effectue l'écriture des données en mémoire, c'est-à-dire le prélèvement d'une salve duobinaire dans le signal reçu ;
- la lecture de la mémoire est commandée, de façon à alimenter le module de calcul 52 avec les échantillons mémorisés. Dans le cas d'un signal D2-MAC, 190 échantillons sont mémorisés, ce qui correspond approximativement à la longueur d'une salve duobinaire dans un signal ligne.

La boucle itérative suivante correspond à la génération de la séquence de

**TABLE I    ORGANIGRAMME**

PROCESSUS DE MISE A JOUR DES COEFFICIENTS
DE FILTRAGE D'EGALISATION

```
                    ┌─────────────────────────────────┐
                   (   INITIALISATION DU FILTRE        )◄──────────┐
                    └─────────────────────────────────┘            │
                    ┌─────────────────────────────────┐            │
           ┌───────►│    Initialisation de l'algorithme │          │
           │        └─────────────────────────────────┘            │
           │        ┌─────────────────────────────────┐            │
           │        │   Entrée des données en mémoire  │           │
           │        └─────────────────────────────────┘            │
           │                ┌──────────────┐                       │
           │                │   Lecture     │                      │
           │                │   de la       │                      │
           │                │   mémoire     │                      │
           │                └──────────────┘                       │
```

Génération de la séquence de simulation à phase stable

$$Y = \Sigma\ XiHi$$

Calcul sortie Y un coup sur deux :

Calcul de l'estimée $\hat{Y}$ (DAS)

Calcul de $\quad$ e = Y - $\hat{Y}$

MAJ des coefficients de filtrage

Décalage des entrées d'échantillons dans le filtre

oui $\qquad$ K ≤ Nb itérations

non

test divergence $\qquad$ Test coeff de filtrage $\qquad$ Divergent $\qquad$ RAZ

OK

test d'interruption $\qquad$ Critère d'interruption vérifié $\qquad$ oui

non

simulation à phase d'horloge stable, par répétition de la salve numérique lue dans la mémoire 53, de façon à réaliser le calcul des nouveaux coefficients de filtrage, à l'aide des étapes successives suivantes :

- calcul de l'échantillon de sortie Y, en sortie du filtre. Du fait que, dans le cas du signal D2-MAC, on a choisi une fréquence d'échantillonnage double de la fréquence bit du signal reçu, seul un échantillon sur deux est calculé en sortie du filtre ;
- calcul de la valeur estimée de l'échantillon Y, par exemple à l'aide d'un détecteur à seuil (DAS) ;
- calcul de l'erreur entre l'échantillon calculé et l'échantillon estimé, de façon à générer un nouveau jeu de coefficients de filtrage $H_i$, selon la formule (2) présentée plus haut ;
- décalage des échantillons dans le filtre simulé, en prenant pour valeur des échantillons ceux de la salve numérique mémorisée. Lorsque l'ensemble des échantillons de la mémoire a été lu une première fois, on reprend la lecture des mêmes échantillons une nouvelle fois, et ceci autant que nécessaire pour obtenir le nombre d'itérations (plusieurs milliers) permettant d'obtenir un calcul de coefficients de filtrage pertinents.

Le processus comprend ensuite les deux tests d'arrêt mis en oeuvre dans les modules 54 et 57, à savoir :

- le test de divergence, susceptible de provoquer une RAZ du processus;
- le test d'interruption de la mise à jour des coefficients de filtrage, sur la base de l'un des critères mentionnés auparavant. Lorsque le critère d'interruption est vérifié, le processus reste en observation du signal filtré, sans intervention sur les coefficients du filtre jusqu'à détection d'une nouvelle perturbation ramenant la valeur du critère d'interruption en deçà du seuil d'interruption. A ce moment, il y a réinitialisation de l'algorithme, pour obtenir un calcul itératif de nouveau coefficients de filtrage par balayage de l'ensemble des étapes déjà décrites.

Les figures 7A-7B, 8A-8B, 9A-9B, illustrent trois cas de fonctionnement du processus de l'invention.

## Cas numéro 1 (fig.7A,7B) : signal non perturbé

Le filtre est transparent à l'initialisation. Les échantillons ne sont pas entâchés d'erreur, par conséquent, les coefficients calculés seront identiques à leurs valeurs initiales. Le système est parfaitement stable. De plus, le critère étant vérifié, le calcul de nouveaux coefficients est inhibé.

Le diagramme de l'oeil représenté en fig 7A,7B présente donc un centrage stable du front d'échantillonnage 70,71, centré dans l'oeil avant et après activation du module de calcul.

## Cas numéro 2 (fig.8A,8B) : signal moyennement perturbé

On entend par signal moyennement perturbé, un signal qui permet à la récupération de rythme de s'accrocher (c.a.d. d'avoir une phase de l'horloge stable).

Comme dans le cas précédent, la phase de l'horloge est stable, mais maintenant, le critère d'interruption n'est, éventuellement, plus respecté.

Si le critère d'interruption n'est pas respecté, le calcul algorithmique va se dérouler jusqu'à ce qu'il soit vérifié.

Ceci est illustré par le diagramme de l'oeil des figures 8A,8B : avant activation du module de calcul, le front d'échantillonnage 80 est excentré par rapport à la médiane de l'oeil (fig 8A). L'algorithme de convergence du processus permet un recentrage du front 81, par mise à jour des coefficients de filtrage.

## Cas numéro 3 (fig.9A,9B) : signal fortement perturbé

C'est lors de la réception de signaux fortement perturbés que le système de l'invention apparaît particulièrement performant.

Au sens retenu ici, la présence de fortes perturbations sur la ligne de transmission se traduit par une horloge non stable, et donc par un système non accroché (pas de service rendu).

La structure du dispositif tel que représenté en figure 5 permet alors d'assurer les processus suivants :

- accrochage d'un train binaire, et mémorisation d'une salve duobinaire dans le module de stockage 53. Cette étape est réalisée en utilisant, le cas échéant, l'extracteur de salve duobinaire 47, puis le signal de fenêtrage 49 de la base de temps 43. Le principe d'accrochage au moyen de l'extracteur de salve duobinaire est du type à tentatives successives tolérant un échec. Ceci est réalisé grâce au module 57 de Remise A Zéro, en cas de détection de divergence du module de calcul algorithmique 52, comme détaillé plus haut.
- une étape de correction de la phase d'échantillonnage du signal reçu. Cette étape est réalisée par l'action combinée du filtre d'égalisation 51 et du module de récupération de rythme 42 rebouclé sur le CAN 41. Elle met en oeuvre le processus algorithmique de la table I.

Dans cette étape, le dispositif de l'invention est particulièrement robuste, puisqu'il permet de corriger un certain nombre d'instabilités de phase. A titre d'exemple, les instabilités suivantes :
- irrégularités de phase de l'horloge d'échantillonnage du signal reçu ;
- glissage résiduel de phase ;
- mauvais accrochage de phase, dû au suréchantillonnage ;
- décrochage de la base de temps.

Les irrégularités de phase de l'horloge d'échantillonnage du signal reçu sont essentiellement combattues par le fait qu'on construit une séquence de simulation d'une phase fixe, par répétitions d'une salve comprenant un nombre restreint d'échantillons. De ce fait, quand bien même la phase de l'horloge (générée par le récupérateur de rythme 42) glisse à l'intérieur de la salve, elle aura peu dérivé pendant l'échantillonnage du signal, et l'algorithme fonctionnera sur des données mémorisées présentant une phase quasi stable.

Le problème de l'instabilité résiduelle du signal est illustré en figures 9A,9B. Le signal de la figure 9A présente un oeil peu ouvert, avec un front d'échantillonnage 90 décalé par rapport au centre de l'oeil. Après un cycle d'itérations du module de calcul algorithmique, les coefficients de filtrage transmis au filtre 51 permettent d'obtenir une meilleure ouverture de l'oeil, avec un centrage du front d'échantillonnage 91 dans l'oeil. Toutefois, le fait que l'égalisation soit effectuée de façon imparfaite du fait du haut niveau de perturbation a pour conséquence que la phase du signal reçu de l'horloge d'échantillonnage obtenue à partir des données égalisées ne coïncide pas exactement avec la phase de la salve binaire ayant servi à la mise à jour des coefficients de filtrage. Le front d'échantillonnage théorique devrait donc être 92, et non pas 91. Ceci va donc provoquer un nouveau calcul des coefficients pour essayer de remettre les données en phase avec cette nouvelle phase d'horloge 91. Il en sera de même à chaque boucle.

La distribution de chaque nouvelle phase d'horloge par rapport à l'ancienne et par rapport à une valeur moyenne optimale est mal connue et en cours d'étude. Mais il est clair qu'un risque de divergence existe et que la stabilité de l'ensemble du système n'est pas assurée quelle que soient les perturbations. C'est pour cela que le critère d'interruption a été défini et lorsque celui-ci est vérifié, le calcul algorithmique est inhibé, par conséquent le système ne corrige pas l'erreur de phase résiduelle et l'ensemble du système est parfaitement stable.

Une autre cause d'instabilité du système peut provenir d'une impossibilité de satisfaire le critère d'interruption après convergence, dans le cas par exemple où le signal reçu est trop bruité. La stabilité va alors se traduire par une poursuite en phase des données par rapport à l'horloge ; le coefficient central de filtrage va avoir tendance à s'éloigner de sa position initiale. On aura donc dans ce cas une divergence, prise en compte par le module de RAZ 47.

Dans le cas d'un système fonctionnant à une fréquence d'échantillonnage double de celle des données, l'ensemble des échantillons à cette fréquence double sont mémorisés.

Un échantillon sur deux est pertinent pour le calcul de la sortie du filtre. Lorsque la phase de l'horloge est stable, la position de cet échantillon est bien connue. Lorsque la phase de l'horloge n'est plus stable, cette position n'est pas connue. Dans ce cas, un risque de divergence existe. Le contrôle des coefficients dans le module 57 de RAZ permet de s'affranchir de ce risque. La probabilité, lors de nouvelles mémorisations, que la position choisie, après remise en phase du filtre, corresponde à un échantillon pertinent est supérieure à la probabilité de ne pas trouver cette correspondance, lorsque les limites de fonctionnement du système ne sont pas dépassés.

Enfin, en cas de décrochage de la base de temps 43, le commutateur 59 sera activé par le fil 48 signalant le décrochage de la base de temps 43, de façon à activer l'extracteur de salve duobinaire 47.

On constate donc que la structure du dispositif de l'invention permet d'éviter que se produise une situation de blocage telle qu'une perte du signal ou une divergence des coefficients de filtrage, ce qui le rend extrêmement robuste à toute situation de perturbation du canal de transmission.

La figure 6 est un chronogramme illustrant un séquencement des différents modules de la structure de la figure 5, dans le cas d'une tentative avortée d'extraction de signal 61, puis d'une seconde tentative réussie 62 aboutissant à une mise à jour des coefficients de filtrage 63, jusqu'à satisfaction 64 du critère d'interruption du calcul de nouveaux coefficients de filtrage.

**Revendications**

1. Dispositif égaliseur à récupération de rythme, notamment destiné à équiper un récepteur d'un réseau de transmission ou de diffusion d'un signal comprenant des données,
dispositif du type comprenant un égaliseur numérique (46,56) alimenté par un CAN (41) de numérisation du signal reçu coopérant avec un circuit récupérateur de rythme (42) assurant notamment la synchronisation du CAN (41),

dispositif caractérisé en ce que ledit égaliseur comprend un module de filtrage constitué d'un filtre numérique (51) commandé par un module (52) de calcul de coefficients de filtrage, à partir d'informations représentatives du signal reçu et des moyens (54,57) de stabilisation dudit calcul de coefficients de filtrage,

et en ce que le circuit récupérateur de rythme (42) est disposé en rebouclage rétroactif en sortie de l'égaliseur numérique (46,56) de façon à piloter ledit CAN (41) d'alimentation de l'égaliseur.

2. Dispositif selon la revendication 1 caractérisé en ce que lesdites informations représentatives du signal reçu sont fournies par des moyens d'élaboration de séquences de simulation d'une phase stable de l'horloge du signal reçu, constituées par la répétition d'une salve numérique prélevée dans le signal reçu.

3. Dispositif selon la revendication 2 caractérisé en ce que lesdits moyens d'élaboration des séquences de simulation comprennent des moyens de mémorisation (53) de ladite salve de données prélevée, coopérant avec des moyens d'émissions répétitives de ladite salve mémorisée vers ledit module de filtrage, et des moyens de commande de la mémorisation d'une nouvelle salve de données, pour un nouveau cycle, après élaboration des nouveaux coefficients de filtrage à partir de la séquence de répétition de la salve de données courante.

4. Dispositif selon l'une quelconque des revendications 1 à 3 caractérisé en ce que ledit égaliseur numérique est un filtre transversal, direct ou récursif, et/ou fonctionne selon le critère d'optimisation de l'erreur quadratique moyenne.

5. Dispositif selon l'une quelconque des revendication 1 à 4 caractérisé en ce que lesdits moyens de stabilisation dudit calcul de coefficients de filtrage comprennent des moyens (54) de commande de l'interruption du calcul de nouveaux coefficients de filtrage, suivant un critère de franchissement d'un seuil d'égalisation satisfaisant.

6. Dispositif selon la revendication 5 caractérisé en ce que la grandeur d'expression dudit seuil de commande d'interruption appartient au groupe comprenant l'erreur quadratique moyenne, le taux de viol d'un signal duobinaire, et une valeur de seuil pour au moins un coefficient de filtrage de pilotage du filtre numérique (51).

7. Dispositif selon l'une quelconque des revendications 1 à 6 caractérisé en ce que lesdits moyens de stabilisation dudit calcul de coefficients de filtrage comprennent des moyens (57) de commande du Retour A Zéro des coefficients de filtrage, suivant un critère de franchissement d'un seuil de dérive maximale de fonctionnement du module de filtrage.

8. Dispositif selon la revendication 7 caractérisé en ce que ledit critère de Remise A Zéro appartient au groupe comprenant le franchissement d'un seuil par la somme des coefficients de filtrage, et le franchissement d'un seuil de valeur maximale par au moins un desdits coefficients de filtrage.

9. Dispositif selon l'une quelconque des revendications 1 à 8 caractérisé en ce que ledit CAN (41) assure une numérisation à une fréquence au moins double de la fréquence bit du signal reçu.

10. Dispositif selon l'une quelconque des revendications 1 à 9 caractérisé en ce que le signal reçu est un signal multiplexé de type X-MAC, et en ce que ladite salve prélevée est la salve des données d'un signal ligne et/ou ledit filtre numérique (41) est un filtre transversal fonctionnant au double de la fréquence des données.

11. Dispositif selon l'une quelconque des revendications 1 à 10, dans le cas de la réception d'un multiplex temporel de signaux analogiques et numériques, caractérisé en ce qu'il comprend :
    - un premier moyen (47) d'accrochage d'un train numérique dans le signal reçu;
    - un second moyen (43) de fenêtrage d'une salve numérique dans le signal reçu, à partir du calcul d'une base de temps dans un train numérique accroché et égalisé, et en ce qu'il comporte des moyens (59) de commutation sélective dudit premier moyen d'accrochage (47) ou dudit second moyen de fenêtrage (43), pour la commande (58) de prélèvement et/ou de mémorisation d'une salve numérique constitutive desdites informations représentatives du signal reçu.

EP 0 409 756 B1

12. Procédé d'égalisation et de récupération de rythme réalisé au moyen d'un dispositif selon l'une quelconque des revendications 1 à 11, caractérisé en ce qu'il consiste à :
   - prélever, après numérisation du signal reçu, une salve de données dans ledit signal numérisé, de façon à former une séquence de simulation d'une fréquence d'horloge stable par répétition de ladite salve prélevée ;
   - piloter un filtre numérique (51) de traitement du signal reçu numérisé, au moyen d'un module (52) de calcul de coefficients de filtrage élaborés à partir de ladite séquence de simulation, ledit pilotage étant effectué en différé par rapport au prélèvement de la salve de données ;
   - obtenir une nouvelle référence de synchronisation, à partir de l'analyse du signal reçu numérisé et filtré, par un module récupérateur de rythme (42) ;
   - piloter le fenêtrage de prélèvement des salves de données et/ou le CAN (41) de numérisation du signal reçu à l'aide de ladite nouvelle référence de synchronisation.

13. Procédé selon la revendication 12 caractérisé en ce qu'il comporte au moins une des conditions d'arrêt de fonctionnement suivantes :
   - interruption du calcul de nouveaux coefficients de filtrage, selon un critère de franchissement d'un seuil d'égalisation satisfaisant ;
   - Remise A Zéro des coefficients de filtrage, suivant un critère de franchissement d'un seuil de dérive maximale de fonctionnement du module de filtrage.

**Patentansprüche**

1. Entzerrungsvorrichtung mit Taktwiederherstellung, insbesondere für einen Empfänger eines Übertragungs- oder Sendenetzes für Daten enthaltende Signale mit einem Digitalentzerrer (46, 56), der durch einen A/D-Wandler (41) zur Digitalisierung des empfangenen Signals gespeist wird, welcher mit einem Schaltkreis zur Taktwiederherstellung (42) zusammenwirkt, der insbesondere die Synchronisierung des A/D-Wandlers (41) gewährleistet,
   dadurch gekennzeichnet, daß die Entzerrungsschaltung ein Filtermodul enthält, das aus einem Digitalfilter (51) besteht, der durch ein Modul (52) zur Berechnung der Filterkoeffizienten, ausgehend von repräsentativen Daten des empfangenen Signals, gesteuert wird, sowie Mittel (54, 57) zur Stabilisierung der Berechnung der Filterkoeffizienten,
   und daß der Schaltkreis zur Taktwiederherstellung (42) als Rückkopplungsschleife am Ausgang des Digitalentzerrers (45, 56) angeschlossen ist, so daß er den A/D-Wandler (41) zur Speisung der Entzerrungsschaltung steuert.

2. Vorrichtung nach Anspruch 1,
   dadurch gekennzeichnet, daß die repräsentativen Daten des empfangenen Signals durch Mittel zur Herstellung von Simulationssequenzen des empfangenen zeitlichen Signals mit stabiler Phase geliefert werden, die aus der Wiederholung einer digitalen Signalfolge bestehen, die aus dem empfangenen Signal abgetastet wird.

3. Vorrichtung nach Anspruch 2,
   dadurch gekennzeichnet, daß die Mittel zur Herstellung der Simulationssequenzen Mittel zum Speichern (53) der abgetasteten Signalfolge, die mit Mitteln für die sich wiederholende Sendung der gespeicherten Signalfolge an das Filtermodul zusammenwirkt, sowie Steuerungsmittel zum Speichern einer neuen Signalfolge für einen neuen Zyklus nach dem Ausarbeiten der neuen Filterkoeffizienten enthalten, ausgehend von der Wiederholungsfolge der aktuellen Signalfolge.

4. Vorrichtung nach einem der Ansprüche 1 bis 3,
   dadurch gekennzeichnet, daß der Digitalentzerrer ein direktes oder rekursives Transversalfilter ist und/oder nach dem Optimierungskriterium des mittleren quadratischen Fehlers arbeitet.

5. Vorrichtung nach einem der Ansprüche 1 bis 4,
   dadurch gekennzeichnet, daß die Mittel zur Stabilisierung der Berechnung der Filterkoeffizienten Mittel (54) zur Steuerung der Unterbrechung der Berechnung neuer Filterkoeffizienten gemäß eines Kriteriums zum Überschreiten eines zufriedenstellenden Entzerrungsschwellenwertes enthalten.

6. Vorrichtung nach Anspruch 5,

dadurch gekennzeichnet, daß die Größe des Schwellenwerts für die Unterbrechungssteuerung der Gruppe angehört, die den mittleren quadratischen Fehler, die Verletzungsrate eines duobinären Signals und einen Schwellenwert für mindestens einen Filterkoeffizienten zur Steuerung des Digitalfilters (51) enthält.

7. Vorrichtung nach einem der Ansprüche 1 bis 6,
dadurch gekennzeichnet, daß die Mittel zum Stabilisieren der Filterkoeffizient-Berechnung Steuermittel (57) zum Rücksetzen der Filterkoeffizienten auf 0 gemäß eines Kriteriums zum Übersetzen des Schwellenwertes für die maximale Funktionsabweichung des Filtermoduls enthält.

8. Vorrichtung nach Anspruch 7,
dadurch gekennzeichnet, daß das Kriterium zum Nullrücksetzen der Gruppe angehört, die das Überschreiten eines Schwellenwertes durch die Summe der Filterkoeffizienten sowie das Überschreiten eines Schwellenhöchstwerts durch mindestens einen der Filterkoeffizienten enthält.

9. Vorrichtung nach einem der Ansprüche 1 bis 8,
dadurch gekennzeichnet, daß der A/D-Wandler (41) das Digitalisieren bei einer Frequenz gewährleistet, die mindestens das Doppelte der Bitfrequenz des empfangenen Signals beträgt.

10. Vorrichtung nach einem der Ansprüche 1 bis 9,
dadurch gekennzeichnet, daß das empfangene Signal ein multiplexiertes Signal des Typs X-MAC ist und daß die abgetastete Signalfolge eine Datenfolge eines Leitungssignals ist und/oder daß das Digitalfilter (51) ein Transversalfilter ist, dessen Frequenz der doppelten Datenfrequenz entspricht.

11. Vorrichtung nach einem der Ansprüche 1 bis 10, im Falle des Empfangs eines zeitmultiplexierten analogen und digitalen Signals,
gekennzeichnet durch
   - ein erstes Mittel (47) zum Synchronisieren einer digitalen Signalabfolge an das empfangene Signal;
   - ein zweites Mittel (43) zum Herausfenstern einer digitalen Signalfolge im empfangenen Signal, ausgehend von der Berechnung einer Zeitbasis einer synchronisierten und entzerrten digitalen Signalabfolge
und durch Mittel (59) für die selektive Weitergabe des ersten Mittels (47) zum Synchronisieren oder des zweiten Mittels zum Herausfenstern (43), für die Steuerung (58) der Abtastung und/oder für das Speichern einer digitalen Signalfolge, welche Bestandteil der repräsentativen Daten des empfangenen Signals ist.

12. Verfahren zur Entzerrung und Taktwiederherstellung, welches mittels einer Vorrichtung gemäß einem der Ansprüche 1 bis 11 verwirklicht wird,
gekennzeichnet durch folgende Verfahrensschritte:
   - nach Digitalisierung des empfangenen Signals wird eine Datenfolge in dem digitalisierten Signal abgetastet, um durch Wiederholung der abgetasteten Signalfolge eine Simulationssequenz mit einer stabilen Taktfrequenz zu bilden;
   - Es wird ein Digitalfilter (51) ausgesteuert, welches das empfangene digitalisierte Signal mittels eines Moduls (52) zur Berechnung der Filterkoeffizienten, die aus der Simulationssequenz gebildet werden, verarbeitet, wobei die Steuerung zeitverzögert gegenüber der Abtastung der Datenfolge erfolgt;
   - Es wird ausgehend von der Analyse des digitalisierten und gefilterten empfangenen Signals durch ein Taktwiederherstellungsmodul (42) eine neue Synchronisationsreferenz erzielt;
   - Es wird die Herausfensterung zum Abtasten der Datenfolge und/oder der A/D-Wandler (41) zum Digitalisieren des empfangenen Signals mittels der neuen Synchronisationsreferenz gesteuert.

13. Verfahren nach Anspruch 12,
dadurch gekennzeichnet, daß es mindestens eine der folgenden Bedingungen zum Anhalten des Betriebes vorgesehen sind:
   - Unterbrechung der Berechnung neuer Filterkoeffizienten, gemäß eines Kriteriums zum Überschreiten eines zufriedenstellenden Entzerrungsschwellenwertes;
   - Nullrücksetzung der Filterkoeffizienten gemäß eines Kriteriums zum Überschreiten eines Schwellenwertes für die maximale Funktionsabweichung des Filtermoduls.

## Claims

1. Equalizer device with clock recovery, particularly intended to equip a receiver of a network for transmitting or broadcasting a signal comprising data,
a device of the type comprising a digital equalizer (46, 56) fed by an ADC (41) for digitizing the signal received, cooperating with a clock recovery circuit (42) providing in particular for the synchronizing of the ADC (41),
a device characterized in that the said equalizer comprises a filtering module consisting of a digital filter (51) controlled by a module (52) for the calculation of filtering coefficients from information representing the received signal, and means (54, 57) for stabilizing the said calculation of filtering coefficients,
and in that the clock recovery circuit (42) is arranged in retroactive feedback at the output of the digital equalizer (46, 56) so as to drive the said ADC (41) for feeding the equalizer.

2. Device according to Claim 1, characterized in that the said information representing the received signal is provided by means for formulating simulation sequences for a stable phase of the timing of the received signal, which sequences consist of the repetition of a digital burst gathered from the received signal.

3. Device according to Claim 2, characterized in that the said means for formulating simulation sequences comprise storage means (53) for the said gathered data burst, cooperating with means for repetitive dispatching of the said stored burst to the said filtering module, and means for control of the storage of a new data burst, for a new cycle, after formulating new filtering coefficients from the repetition sequence of the current data burst.

4. Device according to any one of Claims 1 to 3, characterized in that the said digital equalizer is a direct or recursive transverse filter and/or operates according to the criterion of optimization of the mean square error.

5. Device according to any one of Claims 1 to 4, characterized in that the said means for stabilizing the said calculation of filtering coefficients comprise means (54) for controlling the interruption of the calculation of new filtering coefficients, in accordance with a criterion of crossing of a satisfactory equalization threshold.

6. Device according to Claim 5, characterized in that the magnitude for expressing the said interruption control threshold belongs to the group comprising the mean square error, the rate of violation of a duobinary signal, and a threshold value for at least one filtering coefficient for driving the digital filter (51).

7. Device according to any one of Claims 1 to 6, characterized in that the said means for stabilizing the said calculation of filtering coefficients comprise means (57) for controlling the rezeroing of the filtering coefficients, in accordance with a criterion of crossing of a threshold of maximum drifting of operation of the filtering module.

8. Device according to Claim 7, characterized in that the said rezeroing criterion belongs to the group comprising the crossing of a threshold by the sum of the filtering coefficients, and the crossing of a maximum value threshold by at least one of the said filtering coefficients.

9. Device according to any one of Claims 1 to 8, characterized in that the said ADC (41) provides for digitization at a frequency at least double the bit frequency of the signal received.

10. Device according to any one of Claims 1 to 9, characterized in that the received signal is a multiplexed signal of X-MAC type, and in that the said gathered burst is the burst of data from a line signal and/or the said digital filter (41) is a transverse filter operating at double the frequency of the data.

11. Device according to any one of Claims 1 to 10, in the case of the reception of a time-division multiplex of analog and digital signals, characterized in that it comprises:
   - a first means (47) for locking onto a digital train in the received signal;
   - a second means (43) for gating a digital burst in the received signal, from the calculation of a time base in a locked and equalized digital train, and in that it includes means (59) of selective switching of the said first locking means (47) or of the said second gating means (43), for the control (58) of gathering and/or storage of a digital burst making up the said information representing the received signal.

12. Process of equalization and clock recovery carried out by means of a device according to any one of Claims 1 to 11,

characterized in that it consists in:
- gathering, after digitizing the received signal, a data burst from the said digitized signal, so as to form a simulation sequence for a stable clock frequency by repeating the said gathered burst;
- driving a digital filter (51) for processing the digitized received signal, by means of a module (52) for calculating filtering coefficients formulated from the said simulation sequence, the said driving being performed in delayed mode relative to the gathering of the data burst;
- obtaining a new synchronization reference, from the analysis of the digitized and filtered received signal, by a clock recovery module (42);
- driving the gating for gathering data bursts and/or the ADC (41) for digitizing the received signal with the aid of the said new synchronization reference.

13. Process according to Claim 12, characterized in that it includes at least one of the following conditions for stopping operation:
- interruption of the calculation of new filtering coefficients, according to a criterion of crossing a satisfactory equalization threshold;
- rezeroing of the filtering coefficients, in accordance with a criterion of crossing a threshold of maximum drifting of operation of the filtering module.

Fig. 1

Fig. 2

Fig. 3

40

41

46

CAN

EGALISEUR

42

Récupération
de rythme

Fig. 4

40

41

56

55

CAN

Filtre

53

52

51

44

Mémoire

Calcul
algorithmique

RAZ

45

57

58

59

Critère
d'arrêt

Extracteur
de salves
duobinaires

fenêtre

54

47

Récupération
de rythme

42

48

accrochage

43

49

Base de
temps

fenêtre

Fig. 5

Cas n°1

Fig. 7A

Fig. 7B

Cas n°2

Fig. 8A

Fig. 8B

Cas n°3

Fig. 9A

Fig. 9A

61        62        63        64

Fenêtre
extracteur

Calcul

RAZ

Contrôle

Sortie
filtre

Récup.
rythme

Accrochage
BdT

Fenêtre BdT

Critère
d'interruption

Fig. 6

100        101

(Xn)

T/2        T/2 --- T/2

102

h-N ⊗    ⊗        ⊗    102    ⊗ h+L
                    hø

103
104
(Yn)

SOMMATEUR                    107

108
106        2   1
gr ⊗        ⊗ g1        0
105
T/2 ----- T/2    (Ŷn)

Fig. 10

20